# EUROPEAN PATENT APPLICATION

(11) **EP 4 772 383 A1**
(43) Date of publication of application: **08.07.2026**
(21) Application number: 25193364.4
(22) Date of filing: 01.08.2025
(51) Int. Cl.: B60K 35/22, B60K 35/53, B60K 35/55, B60K 35/60, B60R 11/02

(54) **FLEXIBLE DISPLAY ASSEMBLY FOR VEHICLE**

(30) Priority: 03.01.2025 KR 20250001094
(71) Applicant: Hyundai Mobis Co., Ltd., Gangnam-gu Seoul 06141 (KR)
(72) Inventor: AN, Hyun Jun, 16891 Yongin-si, Gyeonggi-do (KR); AHN, Sung Joon, 16891 Yongin-si, Gyeonggi-do (KR); LEE, Shin Jik, 16891 Yongin-si, Gyeonggi-do (KR); LEE, Jun, 16891 Yongin-si, Gyeonggi-do (KR); KIM, Kyung Hoon, 16891 Yongin-si, Gyeonggi-do (KR); SONG, In Seok, 16891 Yongin-si, Gyeonggi-do (KR); JEONG, Woo Kyung, 16891 Yongin-si, Gyeonggi-do (KR)
(74) Representative: Jung, Minkyu

(57) **Abstract**

A flexible display assembly for a vehicle is provided. The flexible display assembly includes: a frame; a flexible display including at least a portion that is installed on a frame to be movable along a curved surface; a driver installed on the frame, connected to a rear surface of the flexible display, and for providing a driving force; and a tension provider installed on the frame, connected to a rear surface of the frame, and for providing tension in a direction in which the flexible display is unfolded while the flexible display is in motion.

## Description

### CROSS-REFERENCE TO RELATED APPLICATION

This application claims priority to and the benefit of Korean Patent Application No. 10-2025-0001094, filed on January 03, 2025, the disclosure of which is incorporated herein by reference in its entirety.

### BACKGROUND

### 1. Field

The present invention relates to a flexible display assembly for a vehicle, and more specifically, to an assembly of a flexible vehicle display which is mounted in a vehicle and operates while moving according to needs of an occupant.

### 2. Description of the Related Art

According to a technology for a vehicle display relating to movement of a display mounted in a vehicle, conventionally, fixed type vehicle displays are a main stream in vehicle displays. In some vehicles, movable displays are mounted or being developed.

Recently, in the case of center displays mounted in vehicles, since landscape type flat displays, portrait type flat displays, or fixed curvature type displays are mounted in most vehicles, all drivers use the displays at a fixed angle determined by vehicle manufactures, and implementation of technologies for moving displays to desired positions of occupants is incomplete yet.

In addition, although there are some vehicles in which vertically movable displays are mounted, since the displays move in the same plane or curvature when vertically moving, it is inconvenience when using the displays.

### SUMMARY

One embodiment of the present invention is directed to providing a flexible display assembly for a vehicle, in which roller units are segmented and disposed on a rear surface of a flexible display, which is bent to move along a curved surface, to maintain a predetermined force when the flexible display moves along the curved surface, and the flexible display moves along a guide rail to prevent from escaping from a position in a front-rear direction.

In addition, one embodiment of the present invention is directed to providing a flexible display assembly for a vehicle, in which a tensioner is compressed to provide tension to a flexible display, which is moving from a first position to a third position, to prevent a wrinkle phenomenon of a bent front surface of the flexible display and the generation of wrinkles.

In addition, one embodiment of the present invention is directed to providing a flexible display assembly for a vehicle in which a supporter is hooked on a hook member when a flexible display moves to a predetermined position to secure stiffness against a force applied in an X-axis direction.

Objectives of the present invention are not limited to the above-described objectives, and the other objectives which are not described above will be clearly understood by those skilled in the art from the following descriptions.

In a general aspect, a flexible display assembly for a vehicle, includes: a frame; a flexible display including at least a portion that is installed on a frame to be movable along a curved surface; a driver installed on the frame, connected to a rear surface of the flexible display, and configured to provide a driving force; and a tension provider installed on the frame, connected to a rear surface of the frame, and configured to provide tension in a direction in which the flexible display is unfolded while the flexible display is in motion.

The flexible display may include a first display part configured to engage with the driver, a second display part which is connected to an upper end of the first display part and configured to move along the curved surface, and a third display part connected to an upper end of the second display part.

The flexible display assembly may further include rack gears installed at both sides of the rear surface of the flexible display, and rack-pinions engaged with the rack gears that are provided on both ends of a driven shaft of the driver.

The driver may include a driving source for providing the driving force, a driving shaft rotatably installed on the driving source and provided with a worm gear, a driven shaft provided with a worm wheel engaged with the worm gear, and rack-pinions provided on both ends of the driven shaft.

The flexible display assembly may further include rollers that are in contact with guide rails provided at both sides of the frame, and rotatably installed on the rear surface of the flexible display.

The rollers may be segmented and disposed in a moving direction of the flexible display.

Each of the rollers may include a roller plate formed on the rear surface of the flexible display to extend in a left-right direction, a first roller part disposed between the rear surface of the flexible display and the guide rail, and a second roller part disposed in contact with an outer surface of the guide rail.

The flexible display assembly may further include a guide protrusion protruding from the first roller part or the guide rail, and a guide groove, into which the guide protrusion is inserted and along which the guide protrusion is guided, formed in the first roller part or an opposing side of the guide rail.

The flexible display assembly may further include an auxiliary guide rail installed behind and parallel to an upper portion of the guide rail.

A lower end of the auxiliary guide rail may be inclined downward toward a rear side.

The tension provider may include a tensioner including a lower end that is supportably installed on the frame, and a cable including an end portion connected to an upper end of the tensioner, and another end portion connected to the rear surface of the flexible display, wherein the tensioner may provide tension to the rear surface of the flexible display through the cable.

The flexible display assembly may further include a first supporter on which a pulley, around which the cable is wound and which changes a direction of the cable, is rotatably installed on the frame.

The flexible display assembly may further include a supporter for supporting the rear surface of the flexible display in response to the flexible display arriving at a preset position is installed on the frame.

The flexible display assembly may further include a hook member, on which the supporter is hooked, protrudes from the rear surface of the flexible display.

The flexible display may move from a lowermost end to arrive at one of a first position, a second position, or a third position, wherein the supporter may include a first supporter on which the hook member is hooked when the flexible display arrives at the second position, and a second supporter on which the hook member is hooked when the flexible display arrives at the third position.

The first supporter may include a first supporting member with which the hook member is engaged and on which the hook member is hooked, wherein the second supporter may include a second supporting member with which the hook member is engaged and on which the hook member is hooked, and wherein the first supporting member may be elastically supported on the frame to provide an elastic force in a direction in which the hook member is hooked.

The hook member may include a first hook member hooked on the first supporting member, and a second hook member hooked on the second supporting member.

The first hook member may be disposed on a central portion in a left-right direction, wherein the second hook member may be disposed on each of two sides of the first hook member.

In another general aspect, a flexible display assembly for a vehicle, includes: a frame; a flexible display including at least a portion that is installed on the frame and configured to be movable along a curved surface; a driver installed on the frame, connected to a rear surface of the flexible display, and configured to provide a driving force; and rollers rotatably installed on the rear surface of the flexible display and in contact with guide rails provided on both sides of the frame.

The flexible display may further include a supporter for supporting the rear surface of the flexible display in response to the flexible display arriving at a preset position is formed on the frame.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a perspective view illustrating a flexible display positioned at a first position in a flexible display assembly for a vehicle according to one embodiment of the present invention;
FIG. 2 is a perspective view illustrating the flexible display positioned at a second position in the flexible display assembly for a vehicle according to one embodiment of the present invention;
FIG. 3 is a perspective view illustrating the flexible display positioned at a third position in the flexible display assembly for a vehicle according to one embodiment of the present invention;
FIG. 4 is a side cross-sectional view illustrating the flexible display positioned at the first position in the flexible display assembly for a vehicle according to one embodiment of the present invention;
FIG. 5 is a side cross-sectional view illustrating the flexible display positioned at the second position in the flexible display assembly for a vehicle according to one embodiment of the present invention;
FIG. 6 is a side cross-sectional view illustrating the flexible display positioned at the third position in the flexible display assembly for a vehicle according to one embodiment of the present invention;
FIG. 7 is a plan view illustrating the flexible display assembly for a vehicle according to one embodiment of the present invention;
FIG. 8 is a perspective view illustrating a driving unit of the flexible display assembly for a vehicle according to one embodiment of the present invention;
FIG. 9 is a perspective view illustrating an example of the operation of the driving unit of the flexible display assembly for a vehicle according to one embodiment of the present invention;
FIG. 10 is a perspective view illustrating a roller unit of the flexible display assembly for a vehicle according to one embodiment of the present invention;
FIG. 11 is a transversal sectional view illustrating one example of the roller unit of the flexible display assembly for a vehicle according to one embodiment of the present invention;
FIG. 12 is a transversal sectional view illustrating another example of the roller unit of the flexible display assembly for a vehicle according to one embodiment of the present invention;
FIG. 13 is a side cross-sectional view illustrating the flexible display positioned at the first position according to one embodiment of the present invention;
FIG. 14 is a side cross-sectional view illustrating the flexible display positioned at the third position according to one embodiment of the present invention;
FIG. 15 is a view illustrating a tension providing unit when the flexible display is positioned at the first position according to one embodiment of the present invention;
FIG. 16 is a view illustrating the tension providing unit when the flexible display is positioned at the third position according to one embodiment of the present invention;
FIG. 17 is an exploded perspective view illustrating a supporter of the flexible display assembly for a vehicle according to one embodiment of the present invention;
FIG. 18 is a view illustrating the flexible display positioned at the second position and supported by the supporter according to one embodiment of the present invention; and
FIG. 19 is a view illustrating the flexible display positioned at the third position and supported by the supporter according to one embodiment of the present invention.

### DETAILED DESCRIPTION

Since the present invention may be variously modified and have several embodiments, specific embodiments will be illustrated in the accompanying drawings and described in detail. However, this is not intended to limit the present invention to the specific embodiments, and it should be appreciated that all changes, equivalents, and substitutes falling within the spirit and technical scope of the present invention are encompassed in the present invention. In the description of the embodiments, certain detailed descriptions of the related art will be omitted when it is deemed that they may unnecessarily obscure the gist of the present invention.

Terms such as "first" and "second" may be used to describe various components, but the components are not limited by the above terms. These terms are used only to distinguish one component from another.

Terms used herein are only for the purpose of describing particular embodiments and are not intended to limit the present invention. Singular forms are intended to include the plural forms, unless the context clearly indicates otherwise. In the present specification, it should be understood that the terms "comprise," "comprising," "include," and/or "including" specify the presence of stated features, numbers, steps, operations, elements, components, and/or combinations thereof but do not preclude the presence or addition of one or more other features, numbers, steps, operations, elements, components, and/or combinations thereof.

In addition, throughout the specification, when components are "connected," this may not only mean that two or more components are directly connected, but may also mean that two or more components are indirectly connected through other components or are physically connected and also electrically connected, or are one component even when referred to by different names according to positions or functions thereof.

In addition, when a first component is described as being formed or disposed "on (above) or under (below)" a second component, such a description includes both a case in which the two components are formed or disposed in direct contact with each other and a case in which one or more other components are interposed between the two components. In addition, when a first component is described as being formed "on (above) or under (below)" a second component, such a description may include a case in which the first component is formed at an upper side or a lower side with respect to the second component.

Hereinafter, embodiments of a flexible display assembly for a vehicle according to the present invention will be described in detail with reference to the accompanying drawings, and when the embodiments are described with reference to the accompanying drawings, components that are the same or correspond to each other will be denoted by the same reference numerals, and redundant description thereof will be omitted.

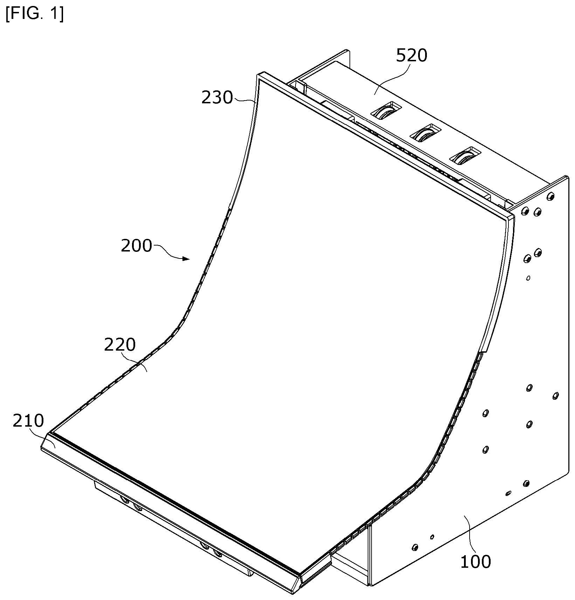

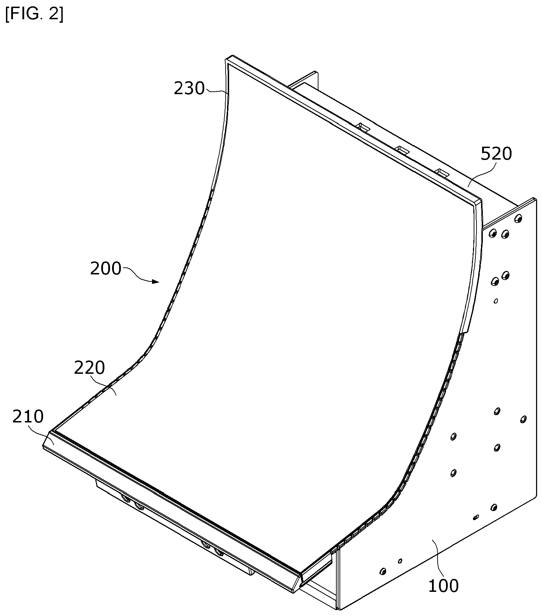

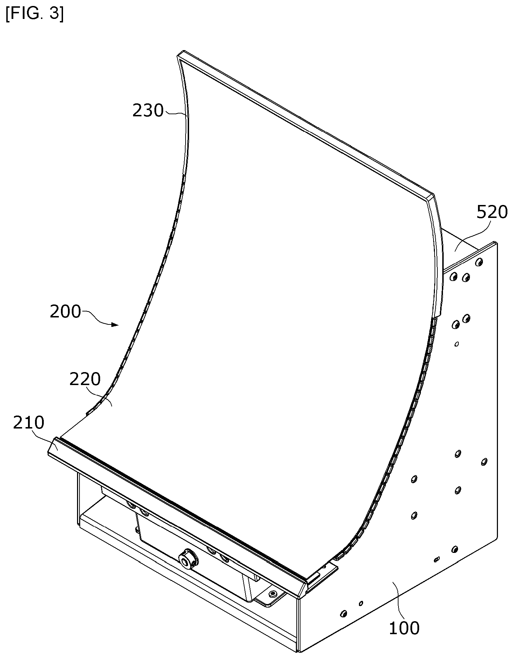

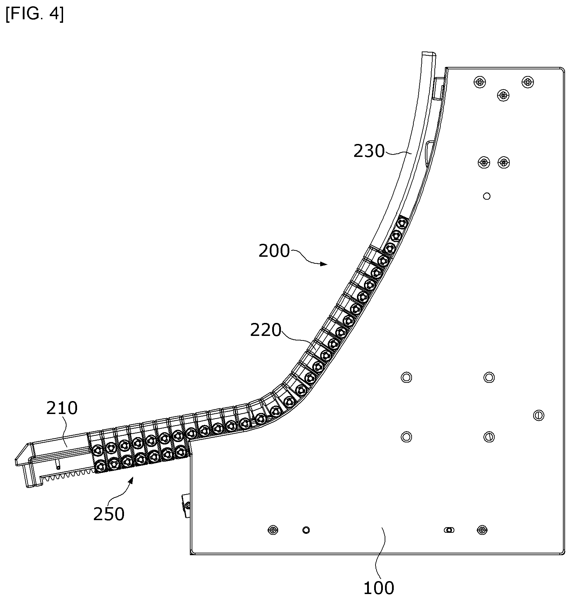

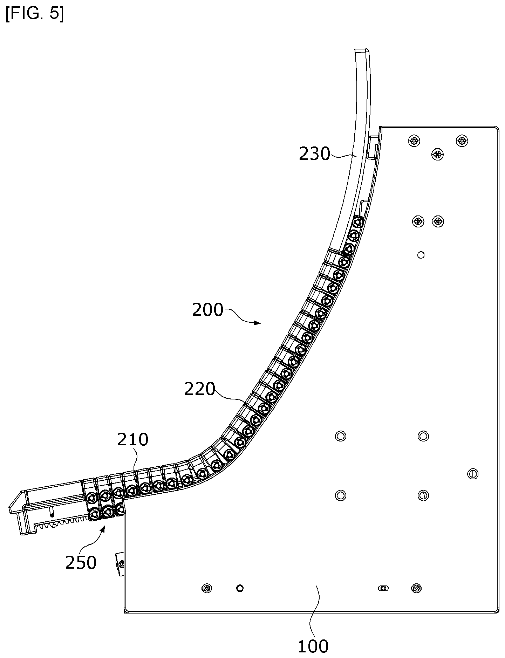

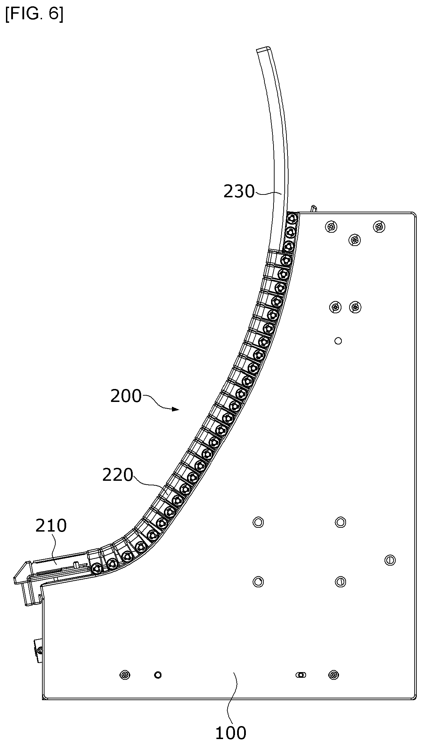

FIG. 1 is a perspective view illustrating a flexible display positioned at a first position in a flexible display assembly for a vehicle according to one embodiment of the present invention, FIG. 2 is a perspective view illustrating the flexible display positioned at a second position in the flexible display assembly for a vehicle according to one embodiment of the present invention, and FIG. 3 is a perspective view illustrating the flexible display positioned at a third position in the flexible display assembly for a vehicle according to one embodiment of the present invention. FIG. 4 is a side cross-sectional view illustrating the flexible display positioned at the first position in the flexible display assembly for a vehicle according to one embodiment of the present invention, FIG. 5 is a side cross-sectional view illustrating the flexible display positioned at the second position in the flexible display assembly for a vehicle according to one embodiment of the present invention, and FIG. 6 is a side cross-sectional view illustrating the flexible display positioned at the third position in the flexible display assembly for a vehicle according to one embodiment of the present invention.

According to the accompanying drawings, the flexible display assembly for a vehicle according to one embodiment of the present invention may include a frame 100, a flexible display 200 of which at least a portion is installed on the frame 100 to be movable along a curved surface, a driving unit 300 which is installed on the frame 100, is connected to a rear surface of the flexible display 200, and provides a driving force, and a tension providing unit 400 which is installed on the frame 100 to be connected to a rear surface of the frame 100 and provides tension while the flexible display 200 moves in a direction in which the flexible display 200 is unfolded.

Referring to FIGS. 1 to 6, the frame 100 may be for guiding and supporting the flexible display 200 to move along the curved surface and may have a structure in which a pair of frames 100 are disposed upright and connected to each other. At least a portion of a front end of the frame 100 disposed upright may be formed to have a curved surface in order to guide the flexible display 200 to move along the curved surface.

The flexible display 200 is a display of which at least a portion may be bent to have a curved surface. In the present embodiment, the flexible display 200 may be movably installed on a portion of the center fascia of a vehicle. As one embodiment, the flexible display 200 is a center information display (CID) through which an audio/video/navigation system (AVN) and a heating, ventilating, and air conditioning (HVAC) are integrally operated, serves as the AVN with high definition of an organic light emitting diode (OLED), and is bent to implement an operation angle of the HVAC in consideration of operational convenience of driver. Particularly, as a concave shape is applied on an AVN region, the sense of immersion of an occupant is improved, and glimmering of a windshield is also reduced. In addition, since a height of the flexible display 200 varies while vertically moving along the frame 100, a screen position may be adjusted according to needs of the occupant.

As one embodiment, the flexible display 200 may include a first display part 210 disposed to be engaged with the driving unit 300, a second display part 220 connected to an upper end of the first display part 210 to move along the curved surface, and a third display part 230 connected to an upper end of the second display part 220. The first display part 210, the second display part 220, and the third display part 230 may be sequentially connected from bottom to top as described above in the flexible display 200.

The first display part 210 is an actual part engaged with the driving unit 300, and the entire flexible display 200 may vertically move in conjunction with movement of the first display part 210. In addition, the first display part 210 may be installed to move straightly but is not limited thereto, and at least a portion of the first display part 210 may be installed to move along a curved surface.

The second display part 220 may vertically move along a curved surface in conjunction with the movement of the first display part 210. The second display part 220 which is the largest portion in the flexible display 200 may be formed to move along the curved surface. To this end, a plurality of segmented roller units 250 may be installed on a rear surface of the second display part 220, and the second display part 220 may be guided along the curved surface by the roller units 250. The second display part 220 may be formed to move along the curved surface and formed to be concave with respect to a front surface that the occupant sees. When the second display part 220 is concavely formed as described above, the glimmering can be reduced, the sense of immersion can be improved, and a delamination phenomenon of the display can be reduced.

The third display part 230 may vertically move in conjunction with the movement of the first display part 210. The third display part 230 may also move along a curved surface like the second display part 220 and may also move along the curved surface in only at least a partial section. The roller unit 250 is not installed on a rear surface of the third display part 230, but the third display part 230 is bendable, and thus the third display part 230 may move along the curved surface.

The flexible display 200 has been described above as including the first display part 210, the second display part 220, and the third display part 230, but is not limited thereto, and may include four or more display parts. In addition, not only the first display part 210, the second display part 220, and the third display part 230 are formed to be movable as descried above, but also there may be various alterations such as the second display part 220 or the third display part 230 being movably engaged with the driving unit 300.

In addition, although not specifically illustrated in the present drawings, an upper end portion of the flexible display 200 may be formed to be bent forward in order to block light.

In the present embodiment, the flexible display 200 may move to be positioned at three positions. This is proposed as one example, the flexible display 200 may move to be positioned at more various positions for the convenience of the occupant. As one embodiment, the flexible display 200 may be position at a home position (first position) as illustrated in FIGS. 1 and 4, a mid-position (second position) as illustrated in FIGS. 2 and 5, or a full position (third position) as illustrated in FIGS. 3 and 6. The positions are positions at which the flexible display 200 are sequentially disposed when moved from bottom to top, the home position is a lowermost position, the mid-position is an intermediate position, and the full position is an uppermost position. The occupant may manipulate the position of the flexible display 200 according to a position, at which the occupant conveniently views the flexible display 200, and use the flexible display 200 while driving.

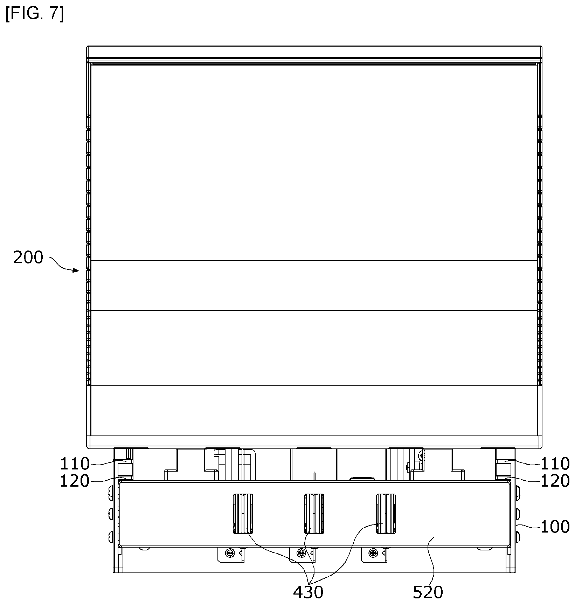

FIG. 7 is a plan view illustrating the flexible display assembly for a vehicle according to one embodiment of the present invention.

Referring to FIG. 7, the rear surface of the flexible display 200 may be movably installed on the frame 100, and both side ends of the flexible display 200 may protrude outward further than the frame 100.

In the present embodiment, the above-described arrangement of the flexible display 200 is for preventing the frame 100 disposed behind the flexible display 200 from protruding further than both sides of the flexible display 200 when viewed from the front. Accordingly, when the occupant views the flexible display 200, it may be implemented that the frame 100 may not be viewed and only the flexible display 200 moves forward. Ultimately, only the flexible display 200 may be driven by the manipulation of the occupant seemingly.

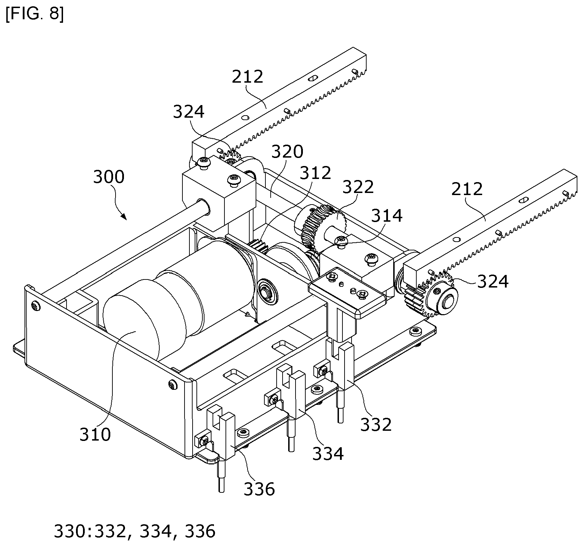

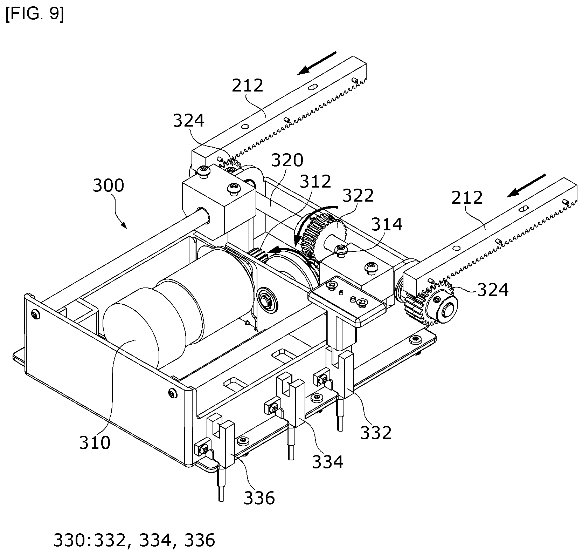

FIG. 8 is a perspective view illustrating a driving unit of the flexible display assembly for a vehicle according to one embodiment of the present invention, and FIG. 9 is a perspective view illustrating an example of the operation of the driving unit of the flexible display assembly for a vehicle according to one embodiment of the present invention.

Referring to FIGS. 8 and 9, the driving unit 300 may include a driving source 310, a driving shaft 312 movably installed on the driving source 310 and provided with a worm 314 (e.g., a worm gear), a driven shaft 320 provided with a worm wheel 322 engaged with the worm 314, and rack-pinions 324 provided at both ends of the driven shaft 320 and engaged with rack gears 212.

The rack gears 212 are portions installed at both sides of the rear surface of the flexible display 200. As one embodiment, the rack gears 212 may be disposed on both sides of a rear surface of the first display part 210 of the flexible display 200 but are not limited thereto. For example, the rack gears 212 may be installed at both sides of the rear surfaces of the first display part 210 and the second display part 220. The rack gears 212 may be directly installed at both sides of the rear surface of the flexible display 200 or installed on a structure such as a separate panel.

A driving motor may be used as the driving source 310, and a driving force provided by the driving source 310 may be sequentially transmitted to the driving shaft 312, worm 314, the worm wheel 322, the driven shaft 320, the rack-pinions 324, and the rack gears 212. Accordingly, when the driving source 310 is driven, the driving shaft 312 rotates clockwise or counter-clockwise to transmit the driving force to the rack gears 212 so that the first display part 210 is moved upward or downward.

For example, when the driving shaft 312 is driven to be rotated clockwise, the flexible display 200 may move from the home position to the mid-position or the full position. In addition, as illustrated in FIG. 9, when the driving shaft 312 is driven to be rotated counter-clockwise, the flexible display 200 may move from the mid-position to the home position or from the full position to the mid-position or the home position. In the present embodiment, since the first display part 210 is formed to be engaged with and driven by the driving unit 300, the flexible display 200 may stably move along the curved surface.

Meanwhile, the driving unit 300 may include a position detection sensor 330 which detects a position of the flexible display 200. The position detection sensor 330 may include a first sensor 332 for detecting the home position, a second sensor 334 for detecting the mid-position, and a third sensor 336 for detecting the full position.

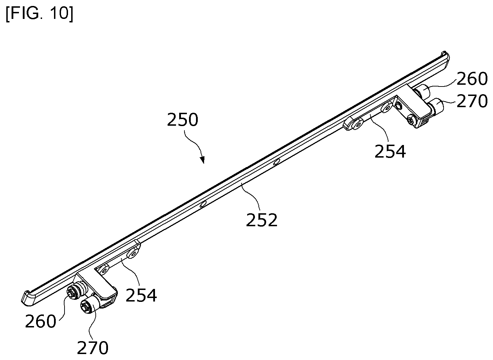

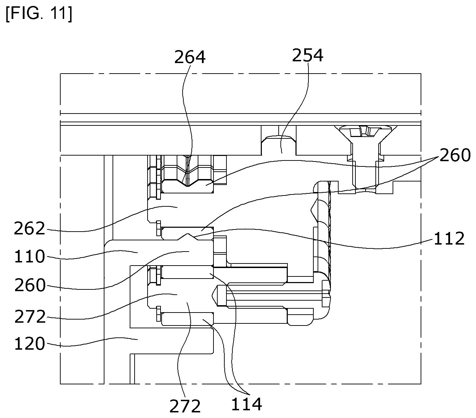

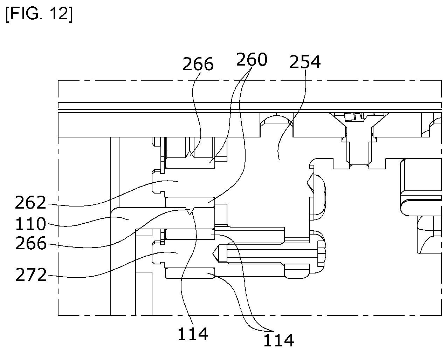

FIG. 10 is a perspective view illustrating the roller unit of the flexible display assembly for a vehicle according to one embodiment of the present invention, FIG. 11 is a transversal sectional view illustrating one example of the roller unit of the flexible display assembly for a vehicle according to one embodiment of the present invention, and FIG. 12 is a transversal sectional view illustrating another example of the roller unit of the flexible display assembly for a vehicle according to one embodiment of the present invention.

Referring to FIGS. 10 to 12, the roller units 250 formed in contact with guide rails 110 provided at both sides of the frame 100 may be rotatably installed on the rear surface of the flexible display 200. The guide rails 110 may be provided in a rail type at both sides of the frame 100.

The roller unit 250 is a unit provided for the flexible display 200 to smoothly move along the curved surface. The roller units 250 may be a plurality of roller units 250 segmented and disposed in a moving direction of the flexible display 200. As one embodiment, several tens of roller units 250 may be sequentially and vertically disposed on the rear surface of the flexible display 200. The flexible display 200 is bent to move along the curved surface, and when the roller units 250 are segmented and disposed on the rear surface of the flexible display 200 on which the bending occurs, a predetermined force may be maintained when the flexible display 200 moves along the curved surface, and since the flexible display 200 moves along the guide rail 110, the flexible display 200 may be prevented from escaping from a position in a front-rear direction, and the flexible display 200 may be stably held.

The roller unit 250 may include a roller plate 252 formed to extend in a left-right direction, a first roller part 260 disposed between the rear surface of the flexible display 200 and the guide rail 110, and a second roller part 270 disposed in contact with an outer surface of the guide rail 110.

The roller plate 252 may have a length corresponding to a left-right width of the flexible display 200, may be formed to extend in the left-right direction, and may support the rear surface of the flexible display 200. Roller installation parts 254 are provided on both end portions of the roller plate 252. The first roller part 260 and the second roller part 270 may be mounted on the roller installation parts 254. The roller installation part 254 may be installed to be bent upright on a rear surface of the roller plate 252, and the first roller part 260 and the second roller part 270 may be mounted on bent portions.

A first roller shaft 262 on which the first roller part 260 is rotatably mounted and a second roller shaft 272 on which the second roller part 270 is rotatably may be provided on the roller installation part 254. In the present drawing, although it is illustrated that the first roller shaft 262 is integrally formed with the roller installation part 254, and the second roller shaft 272 is mounted thereon as a separate part, but the present invention is not limited thereto. The first roller shaft 262 and the second roller shaft 272 may be integrally formed with the roller installation part 254 or mounted thereon as separate parts.

The first roller part 260 is disposed between the rear surface of the flexible display 200 and the guide rail 110 and guides the flexible display 200 to smoothly move along the curved surface. In addition, the second roller part 270 is disposed in contact with the outer surface of the guide rail 110 to serve to prevent the flexible display 200 from escaping from a track in the front-rear direction.

Referring to FIG. 11, a guide groove 264 is formed in a first roller part 260, and a guide protrusion 112 inserted into the guide groove 264 is provided to protrude from a guide rail 110. The guide protrusion 112 and the guide groove 264 are engaged with each other to serve to restrict a flexible display 200 from moving in a left-right direction. In this case, an auxiliary guide rail 120 may be disposed behind and parallel to the guide rail 110, and a second roller part 270 may be disposed between and in contact with a pair of guide rails 110. As one embodiment, the guide groove 264 may be a groove having a "V" shape but is not limited thereto and may have any shape.

Referring to FIG. 12, a guide protrusion 266 may be provided to protrude from a first roller part 260, and a guide groove 114 into which the guide protrusion 266 is inserted may be formed in a guide rail 110. As one embodiment, the guide groove 114 may be a groove having a "V" shape but is not limited thereto and may have any shape.

Meanwhile, contact surfaces of the first roller part 260 and the second roller part 270 may be anodized or coated with Teflon to prevent from being worn. The roller unit 250 may be installed on the rear surface of the second display part 220 of the flexible display 200 but is not limited thereto and may also be installed on the first display part 210 or the third display part 230.

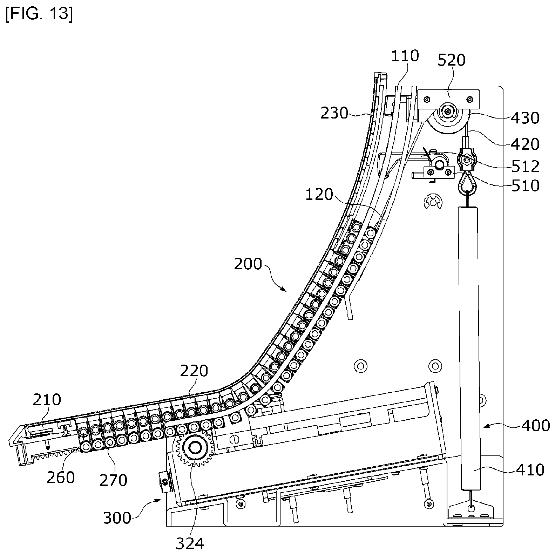

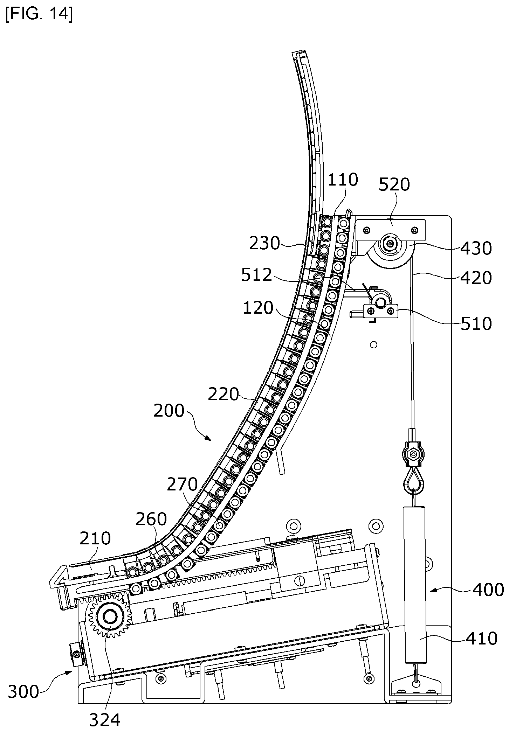

FIG. 13 is a side cross-sectional view illustrating the flexible display positioned at the first position according to one embodiment of the present invention, and FIG. 14 is a side cross-sectional view illustrating the flexible display positioned at the third position according to one embodiment of the present invention.

Referring to FIG. 13, the flexible display 200 at the first position (home position) is positioned at a lowermost portion. In this case, the first display part 210 may be in a state of being movably engaged with the driving unit 300, and the second display part 220 may be guided by the roller unit 250 installed on the rear surface of the second display part 220 to move along the guide rail 110 along the curved surface.

Referring to FIG. 14, the flexible display 200 at the third position (full position) is positioned on an upper most portion. In this case, the second display part 220 may be guided by the roller unit 250 installed on the rear surface of the second display part 220 to move upward along the guide rail 110 along the curved surface, and the third display part 230 may protrude outward from the guide rail 110.

At the third position, since the flexible display 200 protrudes outward from an upper end of the guide rail 110 as described above, a structure for stably supporting the third display part 230 is required. Accordingly, in the present embodiment, the auxiliary guide rail 120 may be provided behind the guide rail 110 to be parallel thereto. The auxiliary guide rail 120 may be provided on only an upper section of the guide rail 110 without being provided on an entire rear side of the guide rail 110. In addition, a lower end of the auxiliary guide rail 120 may be formed to be inclined downward toward a rear side such that the second roller part 270 may smoothly move to the auxiliary guide rail 120.

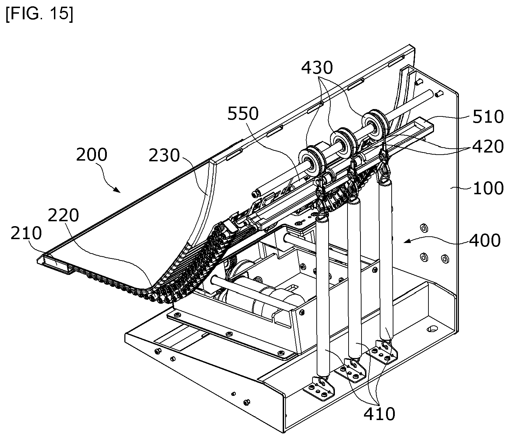

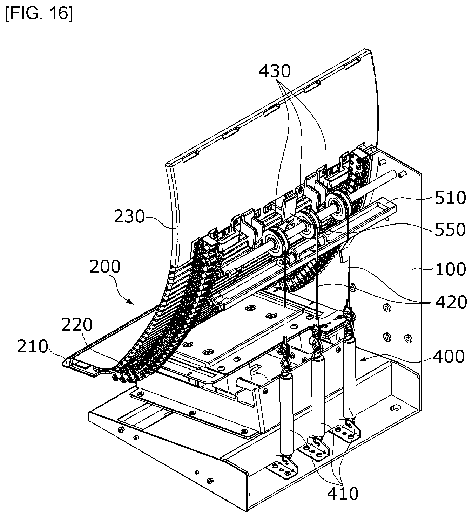

FIG. 15 is a view illustrating the tension providing unit when the flexible display is positioned at the first position according to one embodiment of the present invention, and FIG. 16 is a view illustrating the tension providing unit when the flexible display is positioned at the third position according to one embodiment of the present invention. For reference, in FIGS. 15 and 16, a first supporter 510 is removed such that a pulley 430 is viewed well.

The flexible display 200 may be formed as a very thin structure and may be concavely bent when viewed from the front, and when tension is not applied rearward, wrinkles may be generated in the flexible display 200. Accordingly, in the present embodiment, tension is applied to the rear surface of the flexible display 200, a wrinkle phenomenon in the flexible display 200 is prevented using a force which pulls the rear surface, and a flat state of the flexible display 200 is maintained.

Referring to FIG. 15, the tension providing unit 400 may include a tensioner 410 of which a lower end is supportably installed on the frame 100 and a cable 420 of which one end portion is connected to an upper end of the tensioner and the other end portion is connected to the rear surface of the flexible display 200, and the tensioner 410 may applied tension to the rear surface of the flexible display 200 through the cable 420.

The lower end of the tensioner 410 is supportably installed on a lower portion of the frame 100. As one embodiment, the tensioner 410 may be a spring which provides an elastic force. A plurality of tensioners 410 may be disposed upright on the frame 100 to be spaced apart from each other. The number of the tensioners 410 may be properly adjusted according to a generation extent of the wrinkle phenomenon of the flexible display 200.

One end portion of the cable 420 is connected to each of upper ends of the tensioners 410. The other end portion of the cable 420 may be connected to a first hook member 550 provided to protrude from the rear surface of the flexible display 200. That is, as both end portions of the cable 420 are connected to the tensioner 410 and the first hook member 550, the tension of the tensioner 410 is transmitted to the flexible display 200.

The first supporter 510 on which the pulley 430 is rotatably installed is installed on the frame 100. The first supporter 510 may be installed at an upper side of the frame 100, and the number of pulleys 430 may correspond to the number of the tensioners 410, and the pulleys 430 may be disposed to be spaced apart from each other. A direction of the cable 420 wound around the pulley 430 is changed, the cable 420 extends toward the first hook member 550, and one end portion of the cable 420 is connected to the first hook member 550. In the present embodiment, although the pulley 430 is rotatably installed on the first supporter 510 for spatial efficiency, a separate pulley support may be installed on the frame 100.

Referring to FIG. 16, the tensioner 410 is compressed to provide tension to the flexible display 200 while the flexible display 200 moves from the first position to the third position. Then, the wrinkle phenomenon of a bent front surface of the flexible display 200 may be prevented, the wrinkles may be prevented from being generated.

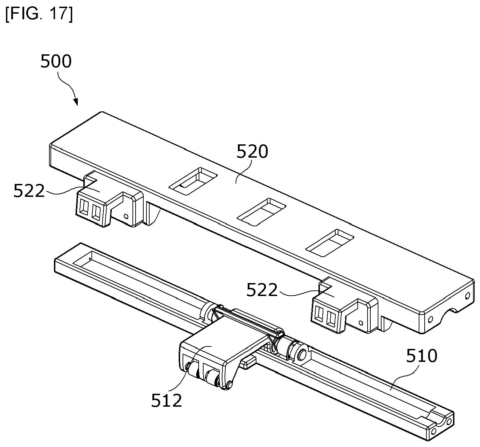

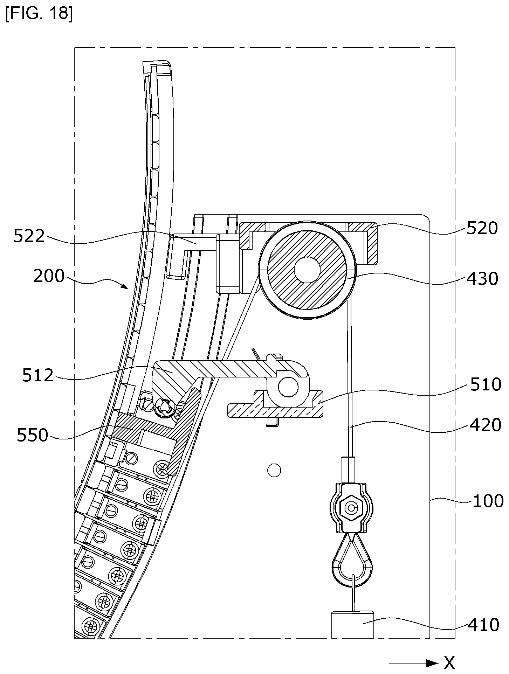

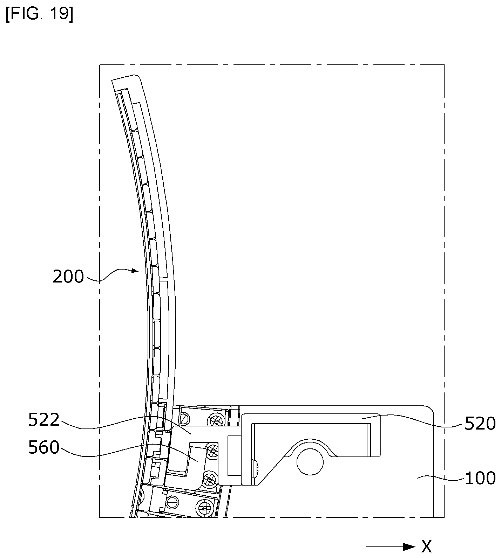

FIG. 17 is an exploded perspective view illustrating a supporter of the flexible display assembly for a vehicle according to one embodiment of the present invention, FIG. 18 is a view illustrating the flexible display positioned at the second position and supported by the supporter according to one embodiment of the present invention, and FIG. 19 is a view illustrating the flexible display positioned at the third position and supported by the supporter according to one embodiment of the present invention.

Referring to FIG. 17, a supporter 500 which supports the flexible display 200 at a preset position while the flexible display 200 moves may be installed in an upper portion of the frame 100.

Hook members 550 and 560 are members installed on the rear surface of the flexible display 200, and a plurality of hook members 550 and 560 may be disposed to be spaced apart from each other in the left-right direction. The hook members 550 and 560 may include a first hook member 550 on which a first supporting member 512 is hooked and second hook members 560 on which second supporting members 522 is hooked. The first hook member 550 may be disposed on a central portion in the left-right direction, and the second hook members 560 may be disposed on both sides of the first hook member 550. The reason why the first hook member 550 and the second hook member 560 are disposed in the left-right direction is to prevent the first supporting member 512 and the second supporting member 522 from interfering with each other.

As one embodiment, the first hook member 550 may have a shape of which a front end is bent downward, and the first supporting member 512 may be hooked on a bent portion. As one embodiment, the second hook member 560 may have a structure protruding rearward in a "⊂" shape. Accordingly, when the flexible display 200 moves to the third position, the second supporting member 522 may be naturally hooked on the second hook member 560.

The supporter 500 may include the first supporter 510 on which the first hook member 550 hooked when the flexible display 200 arrives at the second position and a second supporter 520 on which the second hook member 560 is hooked when the flexible display 200 arrives at the third position. The first supporter 510 may be installed at a location corresponding to when the first hook member 550 arrives at the second position, and the second supporter 520 may be installed at a location corresponding to when the second hook member 560 arrives at the third position. That is, the second supporter 520 may be installed at a higher location than the first supporter 510. The first supporter 510 and the second supporter 520 may have support shapes installed in a central portion and the upper portion of the frame 100.

The first supporter 510 may include a first supporting member 512 engaged with and hooked on the first hook member 550, and the first supporting member 512 may be elastically supported on the first supporter 510 to provide an elastic force in a direction in which the first supporting member 512 is hooked on the first hook member 550. Referring to FIG. 18, when the flexible display 200 moves to the second position, the first supporting member 512 is hooked on the first hook member 550 and supports the first hook member 550. Then, stiffness against a force applied in an X-axis direction can be secured. For example, stiffness against a force of touching of the flexible display 200 from the occupant can be secured.

While the flexible display 200 moves from the second position to the third position, the first supporting member 512 is leaned back. In addition, when the flexible display 200 moves to the third position, the second supporting member 522 is hooked on the second hook member 560 and supports the second hook member 560. Then, stiffness against a force applied in the X-axis direction can be secured. For example, stiffness against a force of touching of the flexible display 200 from the occupant can be secured.

In the present drawings, it is illustrated than the number of first hook members 550 is provided to correspond to the tensioners 410, and only one first supporting member 512 is provided in a central portion, but the present invention is not limited thereto, the number of first supporting members 512 may be provided to correspond to the first hook members 550. However, in the present embodiment, only one first supporting member 512 being hooked on the first hook member 550 may sufficiently secure a supporting force for the flexible display 200. Since the second hook member 552 is disposed on both sides of the first hook member 550, the flexible display 200 does not interfere with the first supporting member 512 while moving to the third position.

Meanwhile, a flexible display assembly for a vehicle according to another embodiment of the present invention may include a frame 100, a flexible display 200 of which at least a portion is installed on the frame 100 to be movable along a curved surface, a driving unit 300 which is connected to a rear surface of the flexible display 200 and provides a driving force, and roller units 250 rotatably installed on the rear surface of the flexible display 200 and disposed in contact with guide rails 110 provided at both sides of the frame 100.

That is, according to the present embodiment, the flexible display assembly for a vehicle may include the frame 100, the flexible display 200, the driving unit 300, and the roller unit 250 which guides the rear surface of the flexible display 200 may be formed.

In addition, an embodiment in which the tension providing unit 400 and the supporter 500 which have been described above are added thereto may be made.

According to one embodiment of the present invention, since roller units are segmented and disposed on a rear surface of a flexible display, which is bent to move along a curved surface, a predetermined force can be maintained when the flexible display moves along the curved surface, and since the flexible display moves along a guide rail, the flexible display can be prevented from escaping from a position in a front-rear direction.

The driving unit 300, the tension providing unit 400, and the roller units 250 may also be respectively referred to as the driver, the tension provider, the rollers. In addition, a controller (not shown) may control the driving unit 300 based on the detection provided by the first sensor 332, the second sensor 334 and/or the third sensor 336.

In addition, according to one embodiment of the present invention, since a tensioner is compressed to provide tension to a flexible display while moving from a first position to a third position, a wrinkle phenomenon of a bent front surface of the flexible display and the generation of wrinkles can be prevented.

In addition, according to one embodiment of the present invention, since a supporter is hooked on a hook member when a flexible display moves to a predetermined position, stiffness against a force applied in an X-axis direction can be secured.

While the present invention has been described above with reference to exemplary embodiments, it may be understood by those skilled in the art that various modifications and changes of the present invention may be made within a range not departing from the spirit and scope of the present invention defined by the appended claims.

## Claims

1. A flexible display assembly for a vehicle, comprising:
a frame;
a flexible display including at least a portion that is installed on a frame to be movable along a curved surface;
a driver installed on the frame, connected to a rear surface of the flexible display, and configured to provide a driving force; and
a tension provider installed on the frame, connected to a rear surface of the frame, and configured to provide tension in a direction in which the flexible display is unfolded while the flexible display is in motion.

2. The flexible display assembly of claim 1, wherein the flexible display includes:
a first display part configured to engage with the driver;
a second display part which is connected to an upper end of the first display part and configured to move along the curved surface; and
a third display part connected to an upper end of the second display part.

3. The flexible display assembly of claim 1 or 2, further comprising:
rack gears installed at both sides of the rear surface of the flexible display; and
rack-pinions engaged with the rack gears that are provided on both ends of a driven shaft of the driver.

4. The flexible display assembly of any one of claims 1 to 3, wherein the driver includes:
a driving source for providing the driving force;
a driving shaft rotatably installed on the driving source and provided with a worm gear;
a driven shaft provided with a worm wheel engaged with the worm gear; and
rack-pinions provided on both ends of the driven shaft.

5. The flexible display assembly of any one of claims 1 to 4, further comprising:
rollers that are in contact with guide rails provided at both sides of the frame, and are rotatably installed on the rear surface of the flexible display,
wherein the rollers are segmented and disposed in a moving direction of the flexible display.

6. The flexible display assembly of claim 5, wherein each of the rollers includes:
a roller plate formed on the rear surface of the flexible display to extend in a left-right direction;
a first roller part disposed between the rear surface of the flexible display and the guide rail; and
a second roller part disposed in contact with an outer surface of the guide rail.

7. The flexible display assembly of claim 5 or 6, further comprising:
a guide protrusion protruding from the first roller part or the guide rail; and
a guide groove, into which the guide protrusion is inserted and along which the guide protrusion is guided, formed in the first roller part or an opposing side of the guide rail.

8. The flexible display assembly of claim 6, further comprising:
an auxiliary guide rail installed behind and parallel to an upper portion of the guide rail,
wherein a lower end of the auxiliary guide rail is inclined downward toward a rear side.

9. The flexible display assembly of any one of claims 1 to 8, wherein the tension provider includes:
a tensioner including a lower end that is supportably installed on the frame;
a cable including an end portion connected to an upper end of the tensioner, and another end portion connected to the rear surface of the flexible display; and
a first supporter on which a pulley, around which the cable is wound and which changes a direction of the cable, is rotatably installed on the frame,
wherein the tensioner provides tension to the rear surface of the flexible display through the cable,

10. The flexible display assembly of any one of claims 1 to 9, further comprising:
a supporter for supporting the rear surface of the flexible display in response to the flexible display arriving at a preset position is installed on the frame; and
a hook member, on which the supporter is hooked, protrudes from the rear surface of the flexible display.

11. The flexible display assembly of claim 10, wherein the flexible display moves from a lowermost end to arrive at one of a first position, a second position, or a third position, and
wherein the supporter includes:
a first supporter on which the hook member is hooked when the flexible display arrives at the second position; and
a second supporter on which the hook member is hooked when the flexible display arrives at the third position.

12. The flexible display assembly of claim 11,
wherein the first supporter includes a first supporting member with which the hook member is engaged and on which the hook member is hooked,
wherein the second supporter includes a second supporting member with which the hook member is engaged and on which the hook member is hooked, and
wherein the first supporting member is elastically supported on the frame to provide an elastic force in a direction in which the hook member is hooked.

13. The flexible display assembly of claim 12, wherein the hook member includes:
a first hook member hooked on the first supporting member; and
a second hook member hooked on the second supporting member,
wherein the first hook member is disposed on a central portion in a left-right direction, and
wherein the second hook member is disposed on each of two sides of the first hook member.

14. A flexible display assembly for a vehicle, comprising:
a frame;
a flexible display including at least a portion that is installed on the frame and configured to be movable along a curved surface;
a driver installed on the frame, connected to a rear surface of the flexible display, and configured to provide a driving force; and
rollers rotatably installed on the rear surface of the flexible display and in contact with guide rails provided on both sides of the frame.

15. The flexible display assembly of claim 14, further comprising:
a supporter for supporting the rear surface of the flexible display in response to the flexible display arriving at a preset position is formed on the frame.
